# DEMANDE DE BREVET EUROPEEN

(11) **EP 3 979 141 A1**
(43) Date de publication de la demande: **06.04.2022**
(21) Numéro de dépôt: 21198807.6
(22) Date de dépôt: 24.09.2021
(51) Int. Cl.: G06N 3/04, G06N 3/063

(54) **PROCÉDÉ DE GESTION D'UN CALCUL CONVOLUTIF ET DISPOSITIF CORRESPONDANT**

(30) Priorité: 01.10.2020 FR 2010063
(71) Demandeur: STMicroelectronics (Rousset) SAS, 13790 Rousset (FR); STMicroelectronics S.r.l., Agrate Brianza (IT)
(72) Inventeur: FOLLIOT, Laurent, 06620 Gourdon (FR); FALCHETTO, Mirko, 20010 Ossona (IT); DEMAJ, Pierre, 06200 Nice (FR)
(74) Mandataire: Casalonga

(57) **Abrégé**

Le procédé de gestion d'un calcul convolutif réalisé par une unité de calcul adaptée pour calculer des données de sorties sur des canaux de sortie à partir de noyaux de convolution appliqués à des blocs de données d'entrée sur au moins un canal d'entrée, comprend :
- une identification (110) de la taille d'un emplacement mémoire disponible dans une mémoire de travail temporaire de l'unité de calcul ;
- un pré-chargement (130) dans la mémoire de travail temporaire du nombre maximal de noyaux de convolution pouvant être stockés à cette taille ; et
- une commande (140) de l'unité de calcul pour calculer l'ensemble des données de sorties pouvant être calculées à partir noyaux de convolution pré-chargés.

## Description

Des modes de mise en œuvre et de réalisation concernent les réseaux de neurones artificiels opérant des calculs convolutifs, en particulier la gestion des calculs convolutif.

On peut citer par exemple les réseaux de neurones à convolution ou CNN (« Convolutional Neural Networks » en anglais) qui sont typiquement appliqués à la reconnaissance d'objets ou de personnes dans des images ou des vidéos, on parle alors de convolution 2D.

Un réseau de neurones convolutif contient classiquement quatre types de couche traitant successivement l'information : des couches de convolution qui traitent par exemple des blocs d'une image les uns après les autres ; des couches d'activation, typiquement des fonctions non-linéaires, qui permettent d'améliorer la pertinence du résultat des couches de convolution ; des couches de mise en commun (appelée « pooling ») qui permettent de réduire les dimensions des couches ; et des couches entièrement connectées (appelée « fully-connected » ou couche dense) qui relient tous les neurones d'une couche à tous les neurones de la couche précédente.

Pour chaque couche, des données d'entrée arrivent sur des canaux d'entrée en provenance d'une couche précédente, et les données de sortie sont délivrées sur des canaux de sortie. Les canaux d'entrée et de sortie correspondent à des emplacement mémoire, par exemple d'une mémoire vive. L'ensemble des canaux de sortie est appelé « feature map» en anglais.

Les couches de convolution correspondent typiquement à un produit scalaire entre des données d'entrées et des données de poids de noyaux de convolution. Par données de poids, on entend les paramètres d'une opération de convolution relative à un noyau de convolution donné.

Sommairement, le principe des convolutions, en particulier les convolution 2D, est de balayer les canaux d'entrée avec une fenêtre projetée sur des blocs de données d'entrée, et de calculer le produit scalaire de chaque bloc de données d'entrée avec les noyaux de convolution. Le produit scalaire de chaque bloc de données d'entrée correspond à une donnée de sortie, sur les canaux de sortie correspondant respectivement à chaque noyau de convolution.

On notera qu'un noyau de convolution correspond à un canal de sortie, et peut comprendre un nombre de composantes égal au nombre de canaux d'entrée, chaque composante pouvant ainsi être dédiée à un canal d'entrée. En conséquence, la taille « absolue » d'un tel noyau de convolution, c'est-à-dire le nombre de données de poids du noyau, aura la taille d'une composante, égale à la taille de la fenêtre par exemple 3*3 pixels, multipliée par le nombre de canaux d'entrées. Les poids sont typiquement stockés dans une mémoire non-volatile.

Les réseaux neuronaux convolutif « CNN » sont grandement utilisés dans l'intelligence artificielle. Les exécutions de calculs par des réseaux neuronaux convolutif sont assez exigeantes en capacité de mémoire non-volatiles pour stocker les poids, en capacité de mémoire volatile pour les données d'entrée/sortie et en cycles de calculs entraînant des temps d'inférence élevé (le temps d'inférence est le terme usuel dans le domaine de l'intelligence artificielle donné au temps nécessaire pour effectuer la tâche pour laquelle le réseau neuronal a été paramétré, ou entraîné dans le cadre de techniques d'auto-apprentissage).

Il existe un besoin de réduire le temps d'inférence des calculs exécutés dans les réseaux neuronaux convolutifs.

Des solutions existantes présentent typiquement l'inconvénient de ne pas proposer de compromis avantageux à la fois sur la réduction du temps d'inférence et sur la réduction de l'occupation de mémoire.

En effet, par exemple les techniques du type « TVM » générant un code spécifique pour chaque couche afin d'éviter des exécutions en boucles, peuvent réduire la quantité de cycles mais ont un impact non négligeable sur la taille de la mémoire non-volatile. Aussi, les techniques dites de « poids stationnaire » (« Weight stationary » en anglais), ou de « caractéristique stationnaire » (« Feature Stationary » en anglais) consistent à allouer plus de mémoire volatile pour accélérer les calculs.

Or, les tailles des mémoires non-volatiles et des mémoires volatiles sont directement corrélées au coût final de la solution. Le problème du prix et le problème du compromis entre le temps d'inférence et l'espace mémoire ont un impact d'autant plus grand dans le cadre des dispositifs bon marché ayant des ressources limitées en mémoires (vive et non-volatile) et en vitesse de calcul.

Les aspects proposés ci-après, ainsi que leurs modes de réalisation et de mise en œuvre, permettent une grande réduction du temps d'inférence sur les convolutions 2D, proche de la limite théorique en nombre de cycles par opération de calcul convolutif, sans augmentation des mémoires volatile et non-volatile.

Selon un aspect il est proposé un procédé de gestion d'un calcul convolutif réalisé par une unité de calcul adaptée pour calculer des données de sorties sur des canaux de sortie à partir de noyaux de convolution appliqués à des blocs de données d'entrée sur au moins un canal d'entrée, les calculs sur chaque bloc de données d'entrée correspondant à respectivement chaque donnée de sortie sur les canaux de sortie, et les calculs avec chaque noyau de convolution correspondant aux données de sorties sur respectivement chaque canal de sortie.

Selon une caractéristique générale de cet aspect, le procédé comprend :
- une identification de la taille d'un emplacement mémoire disponible dans une mémoire de travail temporaire de l'unité de calcul ;
- un pré-chargement dans la mémoire de travail temporaire du nombre maximal de noyaux de convolution pouvant être stockés à cette taille ; et
- une commande de l'unité de calcul pour calculer l'ensemble des données de sorties pouvant être calculées à partir noyaux de convolution pré-chargés.

La mémoire de travail temporaire de l'unité de calcul, usuellement appelée « mémoire scratch », est un emplacement mémoire dont la durée de vie est temporaire, par ailleurs toujours fournie par tout type de générateur de code ou compilateur. La taille de l'emplacement mémoire disponible dépend de chaque application et n'est pas systématiquement prévisible.

Le procédé selon cet aspect prévoit une utilisation optimale de la mémoire de travail temporaire au cas par cas, en y pré-chargeant un maximum de noyaux de convolution selon la taille disponible identifiée, ce qui permet de réduire le nombre de processus de récupération et chargement des noyaux de convolution utilisés dans les calculs.

On notera que le procédé prévoit une utilisation optimale de la mémoire de travail temporaire disponible, c'est-à-dire que le procédé ne prévoit pas une allocation de mémoire fixée par avance.

En outre, le calcul convolutif effectué par l'unité de calcul est commandé après le pré-chargement des noyaux, et pour un ensemble des données de sortie résultant d'une convolution avec ces noyaux pré-chargés. En d'autres termes, chaque noyau de convolution pré-chargé est exploité au maximum lors du calcul, ce qui permet là encore de réduire le nombre de processus de récupération et de chargement des noyaux de convolution.

La conséquence de la combinaison de ces deux mécanismes de réduction de la quantité de processus mis en œuvre pour la récupération et chargement des noyaux de convolution offre un gain de temps considérable. Des premiers résultats, simulés pour une topologie de réseau neuronal du type couches de convolution 2D, atteignent une réduction de 98% du temps total dédié aux chargements de données par rapport à un procédé classique, et un gain de 30% à 50% sur le temps d'inférence global d'un réseau neuronal complet. Bien entendu, le gain en performances dépendra de la topologie du réseau et des conditions de mise en œuvre.

Enfin, cette approche est générique et peut être appliquée à n'importe quelle organisation des données d'entrée/sortie et des données des noyaux de convolution permettant notamment d'optimiser l'utilisation de la mémoire, par exemple une organisation exploitant la fragmentation de la mémoire.

Selon un mode de mise en œuvre, la commande de l'unité de calcul pour calculer l'ensemble des données de sorties pouvant être calculées à partir noyaux de convolution pré-chargés comprend des chargements successifs dans l'unité de calcul des blocs de données d'entrée correspondant aux données de sorties dudit ensemble.

En d'autres termes, le procédé de gestion prévoit de balayer tous les blocs de données d'entrée pouvant être utilisés avec les noyaux pré-chargés, afin de calculer le maximum de données de sorties à partir des noyaux chargés.

Selon un mode de mise en œuvre, le procédé comprend une répétition de l'étape de pré-chargement et de l'étape de commande, jusqu'à ce que l'ensemble des données de sortie dans tous les canaux de sortie soient calculées.

En effet, si tous les noyaux de convolution ne peuvent pas être chargés dans la mémoire de travail temporaire, alors après avoir calculé le maximum de données de sortie des canaux de sorties correspondant aux noyaux pré-chargés, le processus est répété avec d'autres noyaux de convolutions afin de calculer le maximum de données de sortie des canaux de sorties correspondant à ces autres noyaux de convolution.

En conséquence, le nombre de fois où des blocs de données d'entrée sont chargés dans l'unité de traitement est plus important que dans les procédés classiques, mais cette perte est largement compensée par le gain sur le nombre de fois où les noyaux de convolution sont récupérés et chargés par rapport aux procédés classiques.

Selon un mode de mise en œuvre, l'ensemble des données de sorties pouvant être calculées correspond à la taille maximale des données de sortie pouvant être reçues en une fois dans chaque canal de sortie, l'ensemble pouvant comprendre l'intégralité des données de sortie de chaque canal de sortie, ou ne comprendre qu'une segmentation des données de sortie de chaque canal de sortie.

Par exemple, ladite segmentation des données de sortie de chaque canal de sortie correspond à une ligne ou à un paquet de lignes de chaque canal de sortie.

En effet, des techniques de recouvrement des canaux de sortie sur les canaux d'entrée peuvent permettre d'optimiser les mémoires stockant les données d'entrée et de sortie. Dans une telle situation, la taille maximale des données de sortie pouvant être reçues en une fois dans chaque canal de sortie est limitée à une segmentation, par exemple à une ligne ou à un paquet de lignes selon l'organisation du recouvrement de mémoire, afin de ne pas corrompre les données d'entrée en les écrasant avec les données de sortie.

Selon un mode de mise en œuvre, si ledit ensemble ne comprend qu'une segmentation des données de sortie de chaque canal de sortie, alors la répétition de l'étape de pré-chargement et de l'étape de commande comprend :
a) une répétition de l'étape pré-chargement avec des noyaux de convolution différents de ceux de l'étape pré-chargement précédente et une répétition de l'étape de commande pour la même segmentation, jusqu'à ce que les toutes les données de sortie de ladite segmentation soient calculées pour tous les canaux de sortie, et, en outre,
b) un renouvellement de l'étape a) pour d'autres segmentations, jusqu'à ce que les données de sortie soient calculées dans toutes les segmentations de tous les canaux de sortie.

En d'autres termes, dans ce mode de mise en œuvre on calcule les données de sorties de façon à remplir d'abord une segmentation, telle qu'une ligne, dans tous les canaux de sortie. Pour atteindre tous les canaux de sorties, l'étape de pré-chargement est répétée avec les noyaux de sorties correspondants afin de couvrir successivement la segmentation de tous les canaux de sorties. Ensuite, le processus recommence pour la segmentation suivante, par exemple la ligne suivante, des tous les canaux de sorties.

Malgré la répétition des étapes de pré-chargement des noyaux de convolution pour chaque segmentation, le procédé selon ce mode de mise en œuvre offre un gain de temps atteignant une réduction de 89,7% du temps dédié aux chargements de données par rapport à un procédé classique.

Selon un mode de mise en œuvre, si la taille de l'emplacement mémoire disponible dans la mémoire de travail temporaire est plus petite qu'un seuil de taille minimal, alors l'étape d'identification comprend en outre une allocation d'un emplacement mémoire d'une mémoire tampon de l'unité de calcul ayant la taille du seuil de taille minimal, et ledit pré-chargement est effectué dans l'emplacement mémoire alloué, et est d'un nombre maximal de noyaux de convolution pouvant être stockés à ce seuil de taille minimal.

Dans ce mode de mise en œuvre, un emplacement mémoire est alloué et ainsi la taille mémoire occupée est légèrement augmenté par rapport à l'un des modes de mise en œuvre définis ci-avant. Cela étant, cette augmentation de l'occupation de la mémoire pouvant être égale à la taille de deux noyaux de convolution, n'introduit pas de surcoût excessif, en particulier vis-à-vis du gain obtenu sur le temps de calcul.

Selon un mode de mise en œuvre, les noyaux de convolution comprennent des données de poids, et l'étape de pré-chargement comprend une réorganisation des données de poids des noyaux de convolution pour optimiser ledit calcul des données de sorties par l'unité de calcul.

En d'autres termes, le pré-chargement des données des poids est arrangé de manière à réduire le temps d'inférence indépendamment de la cartographie du stockage des noyaux de convolution.

On notera que les données d'entrée peuvent également être réorganisées à cet égard lors des chargements successifs des blocs de données d'entrée.

Selon un mode de mise en œuvre, les noyaux de convolution comprennent des données de poids, et ledit calcul des données de sorties comprend des opérations de multiplication et accumulation des données d'entrée des blocs chargés avec les données de poids des noyaux de convolution pré-chargés.

Selon un mode de mise en œuvre, avant le pré-chargement des noyaux de convolution dans la mémoire de travail temporaire, les noyaux de convolution sont stockés dans une mémoire non-volatile interne ou externe à l'unité de calcul, et, lors de la commande de l'unité de calcul, les données d'entrée et les données de sortie sont stockées dans une mémoire volatile interne ou externe à l'unité de calcul.

En effet, la réduction de la quantité de processus de récupération et chargement des noyaux de convolution par le procédé selon cet aspect offre un gain de temps même dans le cas d'une mémoire non-volatile interne à l'unité de calcul. Le gain est néanmoins plus grand dans le cas d'une mémoire non-volatile externe. Aussi, le gain de temps ainsi obtenu reste supérieur à la perte de temps provoquée par l'augmentation du nombre de chargement des blocs de données d'entrée, même lorsque les canaux d'entrés sont stockés dans une mémoire externe.

Le procédé selon cet aspect et ces modes de mise en œuvre peut être implémenté par des moyens logiciels, ou mis en œuvre par des moyens matériels, tels qu'un dispositif intégré comportant des moyens de traitement destinés à organiser et commander l'exécution du calcul, par exemple dans un circuit logique de machine d'état.

Il est ainsi proposé un produit programme d'ordinateur comprenant des instructions qui, lorsque le programme est exécuté par un ordinateur, conduisent celui-ci à mettre en œuvre le procédé tel que défini ci-avant.

Il est également proposé un support lisible par ordinateur comprenant des instructions qui, lorsqu'elles sont exécutées par un ordinateur, conduisent celui-ci à mettre en œuvre le procédé tel que défini ci-avant.

Selon un autre aspect, il proposé un dispositif, par exemple un dispositif intégré, comprenant des moyens de traitements configurés pour gérer un calcul convolutif réalisé par une unité de calcul adaptée pour calculer des données de sorties sur des canaux de sortie à partir de noyaux de convolution appliqués à des blocs de données d'entrée sur au moins un canal d'entrée, les calculs sur chaque bloc de données d'entrée correspondant à respectivement chaque donnée de sortie sur les canaux de sortie, et les calculs avec chaque noyau de convolution correspondant aux données de sorties sur respectivement chaque canal de sortie, caractérisé en ce que les moyens de traitement sont en outre configurés pour :
- identifier la taille d'un emplacement mémoire disponible dans une mémoire de travail temporaire de l'unité de calcul ;
- pré-charger dans la mémoire de travail temporaire un nombre maximal de noyaux de convolution pouvant être stockés à cette taille ; et
- commander l'unité de calcul pour calculer l'ensemble des données de sorties pouvant être calculées à partir noyaux de convolution pré-chargés.

Selon un mode de réalisation, les moyens de traitement sont configurés pour commander de l'unité de calcul pour calculer l'ensemble des données de sorties pouvant être calculées à partir noyaux de convolution pré-chargés en chargeant successivement dans l'unité de calcul des blocs de données d'entrée correspondant aux données de sorties dudit ensemble.

Selon un mode de réalisation, les moyens de traitement sont configurés pour répéter le pré-chargement et la commande, jusqu'à ce que l'ensemble des données de sortie dans tous les canaux de sortie soient calculées.

Selon un mode de réalisation, ledit ensemble des données de sorties correspond à la taille maximale des données de sortie pouvant être reçues en une fois dans chaque canal de sortie, l'ensemble pouvant comprendre l'intégralité des données de sortie de chaque canal de sortie, ou ne comprendre qu'une segmentation des données de sortie de chaque canal de sortie.

Selon un mode de réalisation, ladite segmentation des données de sortie de chaque canal de sortie correspond à une ligne ou à un paquet de lignes de chaque canal de sortie.

Selon un mode de réalisation, si ledit ensemble ne comprend qu'une segmentation des données de sortie de chaque canal de sortie, alors, pour répéter le pré-chargement et la commande, les moyens de traitement sont configurés pour :
a) répéter le pré-chargement avec des noyaux de convolution différents de ceux du pré-chargement précédent et répéter la commande pour la même segmentation, jusqu'à ce que les toutes les données de sortie de ladite segmentation soient calculées pour tous les canaux de sortie, et, en outre,
b) renouveler a) pour d'autres segmentations, jusqu'à ce que les données de sortie soient calculées dans toutes les segmentations de tous les canaux de sortie.

Selon un mode de réalisation, si la taille de l'emplacement mémoire disponible dans la mémoire de travail temporaire est plus petite qu'un seuil de taille minimal, alors les moyens de traitement sont configurés pour allouer un emplacement mémoire d'une mémoire tampon de l'unité de calcul ayant la taille du seuil de taille minimal, et pré-charger dans l'emplacement mémoire alloué un nombre maximal de noyaux de convolution pouvant être stockés à ce seuil de taille minimal.

Selon un mode de réalisation, les noyaux de convolution comprennent des données de poids, et les moyens de traitement sont configurés, lors du pré-chargement, pour réorganiser des données de poids des noyaux de convolution pour optimiser ledit calcul des données de sorties par l'unité de calcul.

Selon un mode de réalisation, les noyaux de convolution comprennent des données de poids, et l'unité de calcul est configurée pour calculer les données de sorties par des opérations de multiplication et accumulation des données d'entrée des blocs chargés avec les données de poids des noyaux de convolution pré-chargés.

Il est également proposé un système comprenant un dispositif tel que défini ci-avant, ladite unité de calcul, une mémoire non-volatile interne ou externe à l'unité de calcul destinée à stocker les noyaux de convolution, et une mémoire volatile interne ou externe à l'unité de calcul destinée à contenir les données d'entrée et les données de sortie.

D'autres avantages et caractéristiques de l'invention apparaîtront à l'examen de la description détaillée de modes de mise en œuvre et de réalisation, nullement limitatifs, et des dessins annexés, sur lesquels :
[Fig 1]
[Fig 2]
[Fig 3]
[Fig 4] illustrent des modes de mise en œuvre de l'invention ;
[Fig 5] illustre un fonctionnement classique de gestion de calcul convolutif ;
[Fig 6] illustre des modes de réalisation de l'invention.

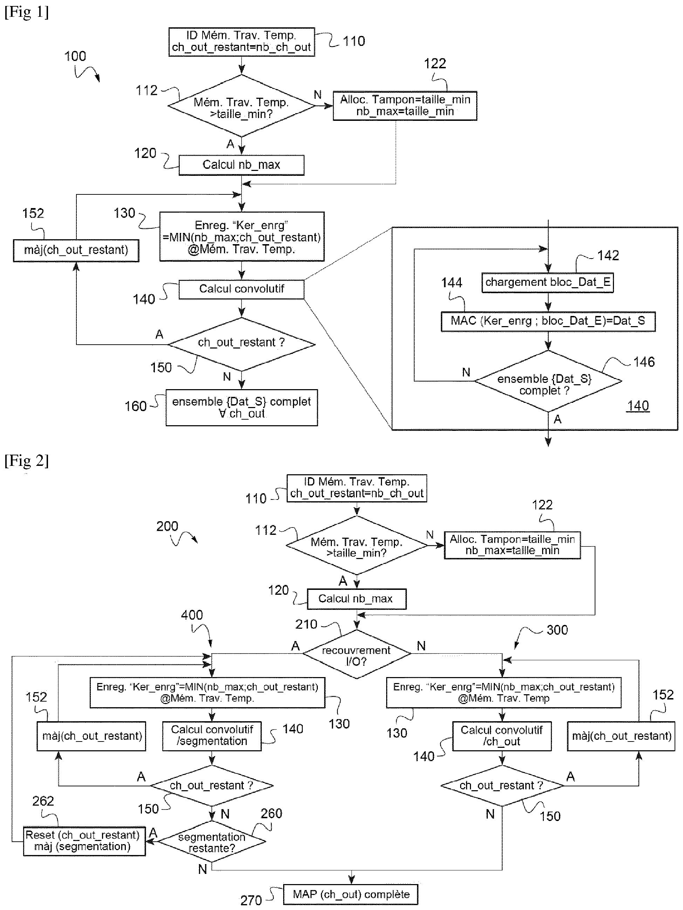

La figure 1 représente une procédure de gestion 100 d'un calcul convolutif d'un réseau neuronal, par exemple du type convolution 2D.

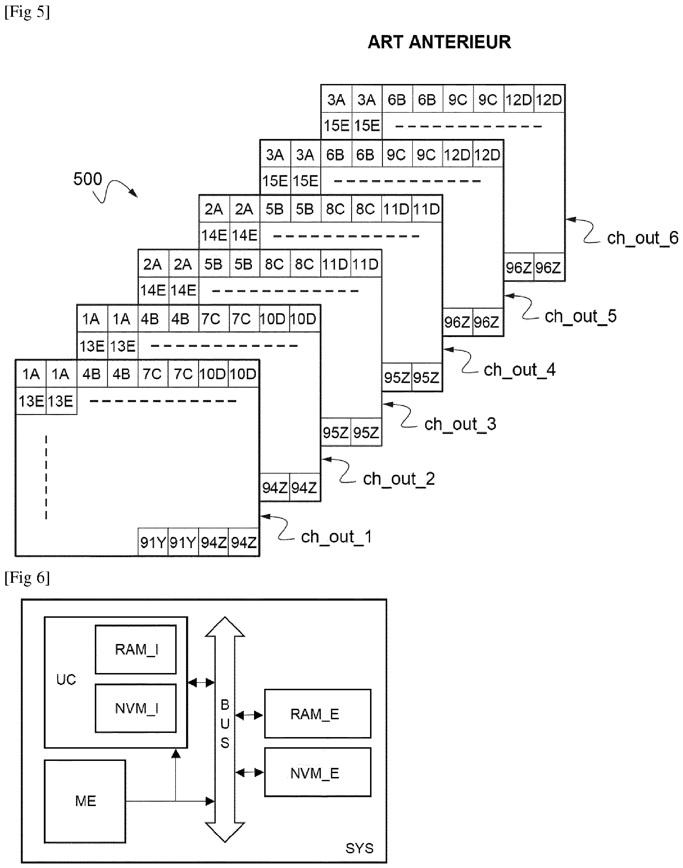

Les opérations mathématiques du calcul convolutif sont réalisées par une unité de calcul UC (figure 6) adaptée pour appliquer des noyaux de convolution à des blocs de données d'entrée d'au moins un canal d'entrée afin de calculer des données de sorties sur des canaux de sortie.

Par exemple, dans le cas où les données d'entrée sont les pixels d'une image « RGB » (rouge-vert-bleu) alors les données d'entrées sont fournies sur un canal d'entrée de composante rouge « R », un canal d'entrée de composante vert « G » et un canal d'entrée de composante bleu « B ». Les noyaux de convolution sont constitués d'une matrice de données de poids ayant la dimension d'une fenêtre de convolution, par exemple 3*3 données de poids. Un produit scalaire, c'est-à-dire une opération de multiplication et accumulation, est calculé entre les pixels d'un bloc de donnée d'entrée ayant la taille de la fenêtre de convolution, pour chaque canal d'entrée, et les données de poids du noyau de convolution. Généralement, mais sans être indispensable, un noyau de convolution comporte une matrice de données de poids dédiée à chaque canal d'entrée. La somme des produits scalaires obtenus sur chaque canal d'entrée constitue une donnée de sortie à une position correspondant à la fenêtre de convolution, dans un canal de sortie. La même opération avec un autre noyau de convolution fournit une donnée de sortie à la même position dans un autre canal de sortie. La fenêtre de convolution balaye l'ensemble de chaque canal d'entrée afin de fournir toutes les données de sorties, autrement appelées « carte de caractéristiques » (usuellement « feature map » en anglais). Les canaux de sortie de la carte de caractéristique peuvent être alors repris comme canaux d'entrée d'une couche suivante du réseau neuronal.

En résumé, les calculs sur un bloc de données d'entrée aboutissent à une donnée de sortie sur les canaux de sortie, et les calculs avec un noyau de convolution aboutissent aux données de sorties sur un canal de sortie.

Les calculs effectués sur tous les blocs de données d'entrée, balayés sur les canaux d'entrée, avec chacun des noyaux de convolution, aboutissent ainsi à l'intégralité des données de sorties sur tous les canaux de sortie, appelée « carte de caractéristiques » (usuellement « feature map » en anglais).

Le procédé de gestion 100 commande et organise le déroulement du calcul convolutif, en particulier la sélection et l'accès aux données d'entrée et aux données de poids utilisées lors des calculs. Les données de poids sont usuellement stockées dans une mémoire non-volatile, tandis que les données d'entrée et de sortie sont usuellement stockées dans une mémoire volatile.

Dans une phase préliminaire du calcul, l'unité de calcul est programmée pour exécuter des instructions mettant en œuvre le calcul convolutif, et une mémoire de travail temporaire de l'unité de calcul est prévue par n'importe quel générateur de code ou compilateur.

La mémoire de travail temporaire de l'unité de calcul, usuellement appelée « mémoire scratch », est un emplacement mémoire dont la durée de vie est temporaire, permettant par exemple typiquement de stocker temporairement des données intermédiaires pour réaliser des opérations calculatoires. La taille de l'emplacement mémoire disponible dépend de chaque application et n'est pas systématiquement prévisible, mais peut néanmoins être connue en sortie d'un générateur de code.

Le procédé comprend une identification 110 de la taille d'un emplacement mémoire disponible dans la mémoire de travail temporaire Mém.Trav.Temp de l'unité de calcul.

Lors de cette première phase d'identification, le procédé peut également comprendre une initialisation d'un paramètre ch_out_restant représentatif du nombre de canaux de sortie restant à calculer. Ce paramètre est initialisé au nombre total de canaux de sortie nb_ch_out de la couche convolutive en cours d'exécution, qui est aussi le nombre de noyaux de convolution utilisés par cette couche.

De façon avantageuse, le procédé peut prévoir un test 112 vérifiant si la taille de l'emplacement mémoire disponible dans la mémoire scratch Mém.Trav.Temp est supérieure à un seuil de taille minimale taille_min.

Le seuil de taille minimale taille_min est avantageusement égal à la taille de deux noyaux de convolution.

Dans l'affirmative A du test 112 (c'est-à-dire la taille de l'emplacement disponible dans la mémoire de travail temporaire est supérieure au seuil de taille minimal taille_min), on calcul 120 le nombre maximal nb_max de noyaux de convolution pouvant être stockés dans l'emplacement disponible de la mémoire de travail temporaire.

Le calcul 120 peut être effectué à partir de la taille identifiée et des dimensions des noyaux de convolutions, par exemple : nb_max=PE(taille/Kx*Ky*nb_ch_in), avec « PE() » la fonction partie entière, « taille » la taille identifiée, « Kx » et « Ky » les dimensions horizontale et verticale des matrices de données de poids des noyaux de convolution, et « nb_ch_in » le nombre de canaux d'entrée.

Dans certains cas, qui peuvent devenir la majorité des cas lorsque les dimensions Kx, Ky et le nombre nb_ch_in sont suffisamment grands, la taille de l'emplacement mémoire disponible est insuffisante.

A cet égard, dans la négative N du test 112 (c'est-à-dire la taille de l'emplacement mémoire disponible dans la mémoire de travail temporaire est plus petite que le seuil de taille minimal taille_min), un emplacement mémoire d'une mémoire tampon de l'unité de calcul est alloué 122.

La taille de l'emplacement tampon alloué est avantageusement égale à la taille du seuil de taille minimal taille_min. Dans ce cas, la valeur nb_max est mise à taille_min.

On considérera dans la suite que l'emplacement alloué dans la mémoire tampon constitue la mémoire de travail temporaire Mém.Trav.Temp.

Le procédé comprend ensuite un pré-chargement 130 dans la mémoire de travail temporaire Mém.Trav.Temp. du nombre maximal nb_max de noyaux de convolution pouvant être stockés à cette taille.

Si la taille disponible dans la mémoire de travail temporaire Mém.Trav.Temp. est plus grande que tous les noyaux de convolutions restant ch_out_restant, alors on ne pré-charge que le nombre restant de noyaux de convolution.

Une fois les noyaux de convolution pré-chargés dans la mémoire de travail temporaire de l'unité de calcul, le calcul convolutif est commandé 140.

A cet égard, l'étape de pré-chargement 130 du procédé 100 peut avantageusement mettre en œuvre une technique de réorganisation des données de poids des noyaux de convolution, permettant d'optimiser ledit calcul 140 des données de sorties par l'unité de calcul.

Le calcul convolutif effectué par l'unité de calcul est commandé pour toutes les données de sortie possible, qui résultent d'une convolution avec les noyaux pré-chargés.

Ainsi la commande du calcul convolutif 140 comprend une succession (146-N) de chargements 142 de blocs de données d'entrée bloc_Dat_E dans l'unité de calcul. Pour chaque chargement 142, l'unité de calcul réalise une séquence de multiplication et accumulation MAC (produit scalaire) des données d'entrée du bloc chargé bloc_Dat_E avec les données de poids des noyaux de convolution Ker_enrg qui ont été pré-chargés à l'étape 130, afin de fournir une donnée de sortie Dat_S.

Tant que l'ensemble des données de sorties Dat_S pouvant être calculés à partir des noyaux de convolution pré-chargés n'est pas compet (146-N), le bloc de donnée d'entrée suivant est chargé 142 et le calcul 146 du produit scalaire correspondant Dat_S est exécuté.

Lorsque l'ensemble des données de sorties Dat_S pouvant être calculés à partir des noyaux de convolution pré-chargés est complet (146-A), alors le procédé comprend une répétition 150 de l'étape de pré-chargement 130 et de l'étape de commande de calcul convolutif 140, jusqu'à ce que toutes les données de sortie dans tous les canaux de sortie soient calculées 160.

A cet égard, un test 150 est prévu pour vérifier s'il reste des canaux de sortie ch_out_restant à calculer.

Dans l'affirmative A du test 150, alors le nombre restant de canaux de sortie ch_out_restant est mis à jour 152, et l'étape de pré-chargement 130 et l'étape de commande de calcul convolutif 140 sont répétées avec le nombre maximal nb_max de noyaux de convolutions correspondant aux canaux de sortie restant.

Là encore, si le nombre de noyaux de convolutions restant ch_out_restant, est inférieur au nombre maximal nb_max, alors on ne pré-charge que le nombre restant de noyaux de convolution.

Dans la négative N du test 150, l'ensemble des données de sortie DatS pouvant être calculés sont obtenues dans tous les canaux de sortie 160.

L'ensemble des données de sorties pouvant être calculées est limité par la taille maximale des données de sortie pouvant être reçues en une fois dans chaque canal de sortie.

Par conséquent, l'ensemble des données de sorties pouvant être calculées correspond à la taille maximale des données de sortie pouvant être reçues en une fois dans chaque canal de sortie.

La limitation de la taille maximale des données de sortie pouvant être reçues en une fois dans chaque canal de sortie peut typiquement provenir de l'utilisation de la mémoire dans laquelle sont stockées les données d'entrée et les données de sorties. En effet, il existe des techniques permettant d'optimiser l'encombrement de cette mémoire par recouvrement ou entrelacement des données d'entrée et des données de sorties. Dans ce type de technique, les données de sorties ne peuvent en effet pas toutes être écrites en mémoire sans écraser (ou corrompre) des données d'entrée qui devraient encore être utilisées pour des calculs suivants.

Par contre, si l'organisation de la mémoire le permet, par exemple s'il existe un emplacement mémoire dédié aux données de sorties distinctement des données d'entrée, alors la taille des données de sortie pouvant être reçues en une fois dans chaque canal peut contenir l'intégralité des données de sortie du canal de sortie.

L'ensemble des données de sorties pouvant être calculées peut ainsi comprendre l'intégralité des données de sortie de chaque canal de sortie, ou ne comprendre qu'une segmentation des données de sortie de chaque canal de sortie. La segmentation peut par exemple correspondre à une ligne ou à un paquet de lignes de données de sortie.

On se réfère à la figure 2.

La figure 2 illustre le procédé de gestion de calcul convolutif 200 tel que décrit précédemment en relation avec la figure 1, en distinguant les deux possibilités mentionnées ci-dessus et concernant les ensembles de données de sorties pouvant être calculées. Les étapes décrites en relation avec la figure 1 supportent les mêmes références et ne seront pas toutes détaillées à nouveau.

En particulier, les étapes liminaires 110, 112, 120 et 122 sont strictement identique.

A l'issue desdites étapes liminaires 110-122, un test 210 est prévu pour par exemple vérifier si les données d'entrée et de sortie I/O sont enregistrées suivant une technique de recouvrement ou d'entrelacement.

Le test 210 est plus largement prévu pour identifier si la taille maximale des données de sortie pouvant être reçues en une fois dans chaque canal de sortie correspondant à une segmentation de canal de sortie.

Dans la négative N du test 210 (c'est-à-dire si la taille maximale des données de sortie pouvant être reçues en une fois dans chaque canal de sortie correspondant à l'intégralité du canal de sortie), alors les étapes de pré-chargement 130, de commande de calcul 140 et leurs répétitions 150, 152 sont mises en œuvre dans une branche 300, sans distinction particulière par rapport à la manière décrite en relation avec la figure 1.

L'ensemble des données de sorties Dat_S, obtenu à chaque cycle de calcul commandé à l'étape 140, correspond ainsi à toutes les données de sortie de chaque canal de sortie en entier /ch_out correspondant aux noyaux de convolution pré-chargés.

En d'autres termes, pour le calcul de nb_max canaux de sorties en entier, une seule phase de pré-chargement des noyaux de convolution 130 a été mise en œuvre.

Ensuite, on pré-charge les noyaux de convolution correspondant aux canaux de sortie restant à calculer (150-152), et toute la carte de caractéristique MAP(ch_out) est obtenue 270.

Dans l'affirmative A du test 210 (c'est-à-dire si la taille maximale des données de sortie pouvant être reçues en une fois dans chaque canal de sortie correspondant à une segmentation de canal de sortie), alors les étapes de pré-chargement 130, de commande de calcul 140 et leurs répétitions 150, 152 sont mises en œuvre dans une branche 400, de façon similaire à la manière décrite en relation avec la figure 1 mais avec en outre une répétition conditionnée 260 sur les segmentations restantes des canaux de sortie.

En effet, les répétitions de l'étape pré-chargement 130 avec des noyaux de convolution différents de ceux de l'étape pré-chargement 130 précédente, et les répétitions de l'étape de commande de calcul 140 pour la même segmentation, résulte au calcul de toutes les données de sortie de cette segmentation, dans tous les canaux de sortie.

Ainsi, pour calculer les données de sorties appartenant à la segmentation suivante, le procédé comprend d'une part un test 260 prévu afin de tester s'il reste une segmentation à calculer.

Dans l'affirmative A du test 260, d'une part on réinitialise le paramètre ch_out_restant à sa valeur initiale (Reset), c'est-à-dire ch_out_restant=nb_ch_out, et on met à jour la segmentation de canal de sortie lors d'une étape 262.

Et d'autre part, on renouvelle les étapes de pré-chargement 130, de commande de calcul 140 et leurs répétitions 150, 152, mais pour la segmentation suivante des canaux de sorties, jusqu'à ce que les données de sortie soient calculées dans toutes les segmentations de tous les canaux de sortie.

On notera qu'une segmentation de canal de sortie correspond à un groupe de données de sortie positionnées dans les canaux de sortie, typiquement une ligne ou un paquet de lignes des canaux de sortie. Ainsi, le renouvellement des étapes de pré-chargement 130 et de commande de calcul 140 pour une autre segmentation, correspond à pré-charger normalement les noyaux de convolution, et à commander les calculs en chargeant d'autres blocs de données d'entrée correspondant aux positions des données de sorties appartenant à ladite autre segmentation.

En conséquence, lorsque toutes les segmentations de canal de sortie de tous les canaux de sortie sont calculées, toute la carte de caractéristique MAP(ch_out) est obtenue 270.

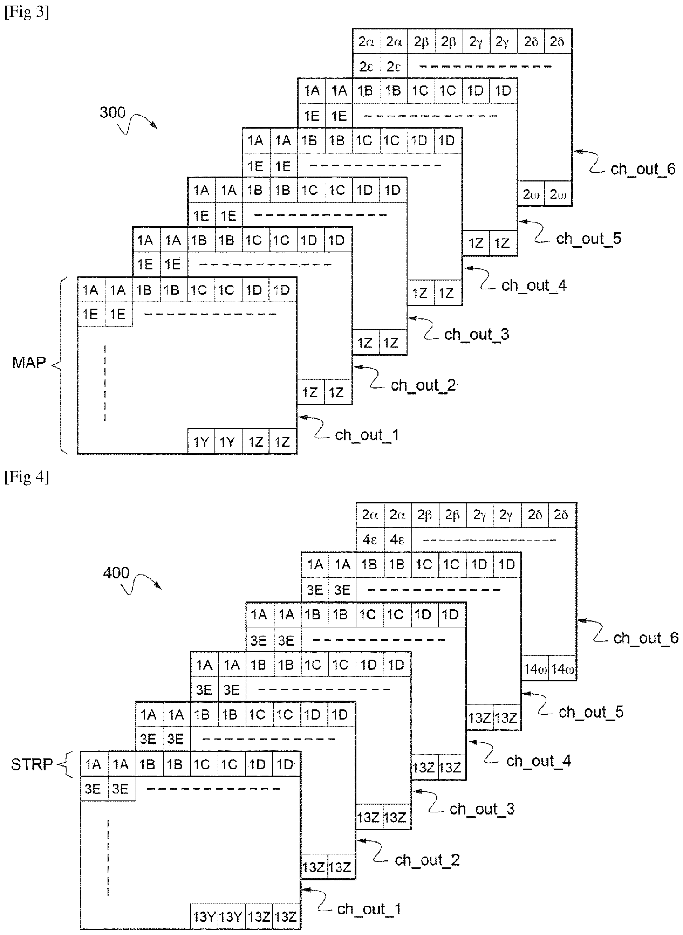

On se réfère désormais aux figure 3 à 5.

La figure 3 représente schématiquement une mise en œuvre du procédé 200 décrit en relation avec la figure 2, dans le cas 300 de la négative N du test 210.

La figure 4 représente schématiquement une mise en œuvre du procédé 200 décrit en relation avec la figure 2, dans le cas 400 de l'affirmative A du test 210.

La figure 5 représente schématique une mise en œuvre d'un procédé classique de gestion 500 d'un calcul convolutif avec les mêmes données d'entrée et les mêmes noyaux de convolution, pour parvenir aux mêmes données de sorties, à titre comparatif.

Dans les figures 3, 4 et 5, six canaux de sorties ch_out_1-ch_out_6 sont représentés sous formes de matrices de données de sortie, chaque donnée de sortie étant représenté par une case contenant un chiffre et une lettre.

On rappelle que chaque donnée de sortie résulte d'un calcul entre un bloc de données d'entrée chargé dans l'unité de calcul et un noyau de convolution pré-chargé dans la mémoire de travail temporaire de l'unité de calcul.

Dans chaque case, le chiffre est modifié (incrémenté numériquement) à chaque fois que le noyau de convolution utilisé pour le calcul de la donnée de sortie correspondante a dû être pré-chargé ; et la lettre est modifié (incrémentée dans l'ordre alphabétique) à chaque fois que le bloc de données d'entrée utilisé pour le calcul de la donnée de sortie correspondante a dû être chargé.

L'utilisation des alphabets latin et grec est une simple notation utilisant par commodité les premières lettres A-E et α-ε pour désigner les premiers chargements de blocs d'entrée et les dernières lettres Z et ω pour désigner les derniers chargements de blocs d'entrée, et n'a aucunement vocation à limiter le nombre total de chargements par le nombre de lettres composant les alphabets respectifs.

On remarquera que les exemples des figures 3 à 5 correspondent à une technique de calcul convolutif usuellement appelée « dual-MAC », mise en œuvre par l'unité de calcul. Les techniques dual-MAC sont bien connues de l'homme de l'art, et permettent sommairement de par exemple calculer deux données de sortie sur deux canaux de sortie, à partir d'un bloc de donnée d'entrée adapté et de deux noyaux de convolution, de façon simultanée par un unique mécanisme de multiplication et accumulation.

Les figures 3 et 4 correspondent à un cas où la taille de l'emplacement mémoire disponible dans la mémoire de travail temporaire de l'unité de calcul peut contenir au maximum cinq noyaux de convolution (nb_max=5).

Ainsi, dans l'exemple de la figure 3, une première étape de pré-chargement « 1 » permet de stocker dans la mémoire de travail temporaire les cinq premiers noyaux de convolution.

L'ensembles des blocs de données d'entrée est balayé « A », « B », « C », « D », « E », ..., « Y », « Z » et combiné (MAC) avec les noyaux de convolution pré-chargés « 1A » ... « 1Z », résultant à l'ensemble complet MAP des données de sorties des cinq canaux de sortie ch_out_1, ch_out_2, ch_out_3, ch_out_4, ch_out_5 correspondant aux cinq noyaux de convolution pré-chargés.

Ensuite, ne restant qu'un dernier noyau de convolution, une seconde étape de pré-chargement « 2 » permet de stocker dans la mémoire de travail temporaire le noyau de convolution correspondant au sixième canal de sortie ch_out_6.

L'ensembles des blocs de données d'entrée est de nouveau balayé « α », « β », « γ », « δ », « ε », ..., « ω » et combiné (MAC) avec les noyaux de convolution pré-chargés « 2α » ... « 2ω », résultant à l'ensemble complet MAP des données de sorties du sixième canal de sortie ch_out_6 correspondant au noyau de convolution pré-chargé.

Dans l'exemple de la figure 4, une première étape de pré-chargement « 1 » permet de stocker dans la mémoire de travail temporaire les cinq premiers noyaux de convolution.

Des blocs de données d'entrée correspondant à la première segmentation de canal de sortie, par exemple la première ligne STRP, est balayé « A », « B », « C », « D », et combinés (MAC) avec les noyaux de convolution pré-chargés « 1A » ... « 1D », résultant à la première ligne STRP de données de sorties des cinq canaux de sortie ch_out_1, ch_out_2, ch_out_3, ch_out_4, ch_out_5 correspondant aux cinq noyaux de convolution pré-chargés.

Une deuxième étape de pré-chargement « 2 » permet de stocker dans la mémoire de travail temporaire le noyau de convolution correspondant au sixième canal de sortie ch_out_6.

Les blocs de données d'entrée correspondant à la segmentation de canal de sortie est balayé « α », « β », « γ », « δ », et combinés (MAC) avec les noyaux de convolution pré-chargés « 2α » ... « 2δ », résultant à la première ligne STRP de données de sorties du sixième canal de sortie ch_out_6 correspondant au noyau de convolution pré-chargé.

Une troisième étape de pré-chargement « 3 » permet de stocker dans la mémoire de travail temporaire les cinq premiers noyaux de convolution, et les blocs de données d'entrée correspondant à la segmentation suivante est balayé « E », ..., et combinés (MAC) avec les noyaux de convolution pré-chargés « 3E » ..., résultant à la deuxième ligne STRP de données de sorties des cinq canaux de sortie ch_out_1, ch_out_2, ch_out_3, ch_out_4, ch_out_5 correspondant aux noyaux de convolution pré-chargés.

Une quatrième étape de pré-chargement « 4 » permet de stocker dans la mémoire de travail temporaire le noyau de convolution correspondant au sixième canal de sortie ch_out_6, et les blocs de données d'entrée correspondant à la segmentation suivante est balayé « ε », ..., et combinés (MAC) avec les noyaux de convolution pré-chargés « 4ε », ..., résultant à la deuxième ligne STRP de données de sorties du sixième canal de sortie ch_out_6 correspondant au noyau de convolution pré-chargé.

Les étapes de pré-chargement et de de balayage des blocs de données d'entrée correspondant aux segmentations suivantes sont renouvelée jusqu'à ce que les données de sortie soient calculées dans toutes les segmentations de tous les canaux de sortie ..., « 13Y », « 13Z » et ..., « 14ω ».

Dans l'exemple de la figure 5, le procédé classique 500 procède d'abord au chargement d'un bloc de donnée d'entrée « A », puis, pour ce bloc de données d'entrée « A », à trois chargements successifs « 1 », « 2 », « 3 » de paires de noyaux de convolution correspondant respectivement aux données de sortie « 1A », « 2A », « 3A » sur les premier et deuxième canaux de sortie ch_out_1, ch_out_2, les troisième et quatrième canaux de sortie ch_out_3, ch_out_4, et les cinquième et sixième canaux de sortie ch_out_5, ch_out_6.

Ensuite, le procédé classique procède d'abord au chargement du bloc de donnée d'entrée suivant « B », puis, pour ce bloc de données d'entrée « B », aux trois chargements successifs des paires de noyaux de convolution « 4 », « 5 », « 6 » correspondant aux données de sortie « 4B », « 5B », « 6B » sur les paires de canaux de sortie respectifs.

Le processus de trois chargements de paires de noyaux de convolution est répété pour chaque bloc de données d'entrée chargés lors du balayage des canaux d'entrée.

On remarquera que les chargements des noyaux de convolution sont effectués par paires en raison de la technique dual-MAC mentionnée ci-avant, et au nombre de trois paires par bloc de données d'entrée en raison du nombre total de six noyaux. Sans la technique dual-MAC, il y a classiquement six chargements successifs d'un seul noyau de convolution pour chaque bloc de données d'entrée.

Le procédé classique utilise ainsi, dans cet exemple arbitraire, quatre-vingt-seize (96) chargements des six noyaux de convolutions, et un alphabet complet A-Z de chargements, par exemple cinquante-six (56) chargements de blocs de données d'entrée.

En comparaison, le procédé 300 utilise, dans le même exemple arbitraire, deux (2) pré-chargements des six noyaux de convolutions, et deux alphabets équivalents, c'est-à-dire cent douze (112) chargements de blocs de données d'entrée.

En comparaison, le procédé 400 utilise, dans le même exemple arbitraire, quatorze (14) pré-chargements des six noyaux de convolutions, et deux alphabets équivalent, c'est-à-dire cent douze (112) chargements de blocs de données d'entrée.

Le tableau Table 1 ci-dessous présente des résultats, représentés en gras, du procédé classique 500 et des procédés avantageux 300 et 400 des modes de mise en œuvre décrits ci-avant.

Les lignes du tableau Table 1 correspondent aux éléments suivants :
nb_ch_in : le nombre de canaux d'entrée ;
Kx : le nombre de colonnes de données de poids d'un noyau de convolution ;
Ky : le nombre de lignes de données de poids d'un noyau de convolution ;
nb_max : le nombre maximal de noyaux de convolution pouvant être stockés à la taille de l'emplacement mémoire disponible dans la mémoire de travail temporaire de l'unité de calcul ;
nb_ch_out : le nombre de canaux de sortie ;
out_x : le nombre de colonnes de données de sorties d'un canal de sortie ;
out_y : le nombre de lignes de données de sorties d'un canal de sortie ;
LA : le temps de chargement d'un bloc de données d'entrée, arbitrairement en nombre de cycles (c) ;
LW : le temps de chargement d'un noyau de convolution, arbitrairement en nombre de cycles (c) ;
500 : le temps total cumulé des chargements de blocs de données d'entrée et de noyaux de convolution du procédé classique 500, arbitrairement en millions de cycles (Mc) ;
300 : le temps total cumulé des chargements de blocs de données d'entrée et de noyaux de convolution du procédé 300, arbitrairement en millions de cycles (Mc) ;
400 : le temps total cumulé des chargements de blocs de données d'entrée et de noyaux de convolution du procédé 400, arbitrairement en millions de cycles (Mc).

On notera que les procédé 300 et 400 offrent un temps total cumulé des chargements blocs de données d'entrée et de noyaux de convolution grandement inférieur au procédé classique 500 dans tous les cas C1-C7 du tableau Table 1, sauf le cas C3.

On notera en particulier le cas C7, pour lequel les procédé 300 et 400 offrent un gain de temps de respectivement 98% et de 89.7% par rapport au procédé classique 500. Le cas C7 est caractérisé en particulier par un relativement grand nombre nb_max (nb_max=30) et par LW>>LA (3>>1).

Par ailleurs, on notera que le cas C3, pour lequel le procédé 300 est sensiblement équivalent au procédé classique 500 et le procédé 400 est légèrement moins rapide que le procédé classique 500 (+8%), est caractérisé par un nombre nb_max minimal (nb_max=2) et par LW<LA (2 < 1).

Le cas C3 correspond en fait à une sous-optimisation théorique des conditions de calculs. En effet, en pratique, les données d'entrée sont typiquement stockées dans une mémoire volatile, tandis que les données de poids des noyaux de convolution sont typiquement stockées dans une mémoire non-volatile. Or, le temps d'accès aux données d'une mémoire volatile LA est usuellement, et dans la grande majorité des cas, plus rapide que le temps d'accès aux données d'une mémoire non-volatile LW (et donc, usuellement, LW>LA).

**[Table 1]**

| | C1 | C2 | C3 | C4 | C5 | C6 | C7 |
|---|---|---|---|---|---|---|---|
| nb_ch_in | 3 | 128 | 128 | 128 | 128 | 128 | 128 |
| Kx | 3 | 3 | 3 | 3 | 3 | 3 | 3 |
| Ky | 3 | 3 | 3 | 3 | 3 | 3 | 3 |
| nb_max | 16 | 2 | 2 | 2 | 30 | 30 | 30 |
| nb_ch_out | 16 | 256 | 256 | 256 | 256 | 256 | 256 |
| out_x | 88 | 11 | 11 | 11 | 11 | 11 | 11 |
| out_y | 88 | 11 | 11 | 11 | 11 | 11 | 11 |
| LA (c) | 2 | 1 | 2 | 1 | 1 | 3 | 1 |
| LW (c) | 1 | 1 | 1 | 2 | 1 | 1 | 3 |
| **500 (Mc)** | **3.8** | **35.8** | **36** | **71.5** | **35.8** | **36.1** | **107.2** |
| **300 (Mc)** | **0.4** | **18.1** | **36** | **18.4** | **1.5** | **4.1** | **2.1** |
| **400 (Mc)** | **0.4** | **21.1** | **38.9** | **24.3** | **4.5** | **7** | **11** |

La figure 6 illustre un exemple de système SYS adapté pour mettre en œuvre le procédé décrit en relation avec les figures 1 à 4.

Le système SYS comprend un dispositif comprenant des moyens de traitement ME, autrement appelé « machine d'état », une unité de calcul UC comportant une mémoire non-volatile interne NVM_I et une mémoire volatile interne RAM_I. Le système SYS comporte en outre une mémoire non-volatile externe NVM_E et une mémoire volatile externe RAM_E.

Les moyens de traitement de la machine d'état ME, et l'unité de calcul UC peuvent par exemple être réalisés sous la forme de dispositifs intégrés dans un circuit intégré ou dans un système sur puce.

Les mémoires externes NVM_E, RAM_E sont reliées à l'unité de calcul UC par l'intermédiaire d'une interface de communication telle qu'un BUS du type « SPI » (acronyme bien connu de l'homme de l'art de « Serial Peripheral Interface »), « I²C » (acronyme bien connu de l'homme de l'art de « Inter-Integrated Circuit »), des bus de la famille « AMBA » (acronyme bien connu de l'homme de l'art de « Advanced Microcontroller Bus Architecture ») dans le cadre d'un système du type « système sur puce » ou tout autre type de bus adapté.

La mémoire non-volatile externe NVM_E est par exemple une mémoire EEPROM ou une mémoire « Flash », telle qu'une mémoire « Flash QSPI » adapté à un bus du type SPI, ou tout autre type de mémoire adaptée.

La mémoire volatile externe RAM_E est par exemple une mémoire vive du type « SDRAM » (acronyme bien connu de l'homme de l'art de « Synchronous Dynamic Random Access Memory »), ou tout autre type de mémoire adaptée.

La mémoire non-volatile interne NVM_I est par exemple une mémoire EEPROM ou une mémoire « Flash », ou tout autre type de mémoire adaptée, intégrée à l'unité de calcul UC.

La mémoire volatile interne RAM_I est par exemple une mémoire vive du type « AXIRAM » adaptée à un bus de microcontrôleur du type AXI (acronyme bien connu de l'homme de l'art de « Advanced eXtensible Interface »), ou tout autre type de mémoire adaptée, intégrée à l'unité de calcul UC.

Lors de la mise en œuvre d'un calcul convolutif, les données de poids des noyaux de convolution sont stockées dans la mémoire non-volatile interne NVM_I ou dans la mémoire non-volatile externe NVM_E ; tandis que les données d'entrée et les données de sortie sont contenues dans la mémoire volatile interne RAM_I ou dans la mémoire volatile externe RAM_E.

L'unité de calcul UC est adaptée pour mettre en œuvre des calculs convolutifs, tels que définis ci-avant, c'est-à-dire notamment des opérations de multiplication et accumulation entre des données d'entrée et des données de poids, résultant à une carte de caractéristiques de données de sortie.

Les moyens de traitement de la machine d'état ME sont configurés pour gérer le calcul effectué par l'unité de calcul UC, selon un procédé de gestion du calcul convolutif tel que décrit ci-avant en relation avec les figures 1 à 4.

En particulier, les moyens de traitement de la machine d'état ME sont configurés pour identifier 110 (figures 1 et 2) la taille d'un emplacement mémoire disponible dans une mémoire de travail temporaire de l'unité de calcul ; pour pré-charger 130 (figures 1 et 2) dans la mémoire de travail temporaire un nombre maximal de noyaux de convolution pouvant être stockés à cette taille ; et pour commander 140 (figures 1 et 2) l'unité de calcul pour calculer l'ensemble des données de sorties pouvant être calculées à partir noyaux de convolution pré-chargés.

A cet égard, la machine d'état ME est capable de générer des signaux commandant l'unité de calcul UC, notamment pour l'identification de la taille de l'emplacement mémoire disponible dans la mémoire de travail temporaire ; et est capable de générer des commandes d'accès en mémoires, notamment pour sélectionner et accéder aux blocs de données d'entrée à charger, et aux noyaux de convolution à pré-charger.

Les moyens de traitement de la machine d'état ME peuvent être configurée à cet égard « en dur », c'est-à-dire par construction du circuit logique mettant en œuvre l'arbre de décision du procédé, par exemple tel qu'illustré par la figure 2, et avantageusement de façon optimisée et accélérée.

Les moyens de traitement peuvent également être configurée à cet égard de façon logicielle, au moyen d'un programme, par exemple enregistré sur un support informatique, comprenant des instructions qui, lors d'une exécution du programme, conduisent la machine d'état ME à mettre en œuvre le procédé. Dans ce cas, les moyens de traitement sont typiquement intégrés à un circuit intégré de microcontrôleur ou microprocesseur, pouvant incorporer également l'unité de calcul UC.

Les modes de mise en œuvre décrit en relation avec les figures 1 à 4 et les modes de réalisation décrits en relation avec la figure 6 permettent, grâce à une utilisation optimale de la mémoire de travail temporaire optimisant grandement l'exécution des couches convolutionnelles des réseaux neuronaux, une grande réduction du temps d'inférence du réseau neuronal, très proche de la limite théorique en terme de cycle par opération de multiplication et accumulation, et sans augmentation de la mémoire volatile RAM_I, RAM_E ni de la mémoire non-volatile NVM_I, NVM_E.

Les résultats avantageux des modes de mise en œuvre et de réalisation, montrés par le tableau Table 1, n'ont notamment pas de condition sur l'emplacement des données de poids (i.e. dans la mémoire non-volatile interne ou externe), ou sur l'emplacement des données d'entrée (i.e. dans la mémoire volatile interne ou externe).

La réduction du temps d'inférence permet notamment une réduction de la consommation d'énergie, une utilisation moins coûteuse des microcontrôleurs, des cas d'utilisation plus complexes, et toujours sans augmenter les mémoires, ni dégrader les performances par exemple en matière de précision.

En outre, les modes de mise en œuvre et de réalisation sont compatibles avec tout type de topologie de réseaux de neurones convolutifs, et sont en effet indépendant du microprocesseur ou microcontrôleur utilisé, sont indépendamment de la largeur de bits des données (par exemple des données à 32 bits en virgule flottante, 8 bits quantifiés, ou moins).

## Revendications

1. Procédé de gestion d'un calcul convolutif réalisé par une unité de calcul (UC) adaptée pour calculer des données de sorties sur des canaux de sortie à partir de noyaux de convolution appliqués à des blocs de données d'entrée sur au moins un canal d'entrée, les calculs sur chaque bloc de données d'entrée correspondant à respectivement chaque donnée de sortie sur les canaux de sortie, et les calculs avec chaque noyau de convolution correspondant aux données de sorties sur respectivement chaque canal de sortie, **caractérisé en ce que** le procédé comprend :
- une identification (110) de la taille d'un emplacement mémoire disponible dans une mémoire de travail temporaire de l'unité de calcul ;
- un pré-chargement (130) dans la mémoire de travail temporaire du nombre maximal de noyaux de convolution pouvant être stockés à cette taille ; et
- une commande (140) de l'unité de calcul pour calculer (144) l'ensemble des données de sorties pouvant être calculées à partir noyaux de convolution pré-chargés.

2. Procédé selon la revendication 1, dans lequel la commande (140) de l'unité de calcul pour calculer l'ensemble des données de sorties pouvant être calculées à partir noyaux de convolution pré-chargés comprend des chargements (142) successifs dans l'unité de calcul des blocs de données d'entrée correspondant aux données de sorties dudit ensemble.

3. Procédé selon l'une des revendications 1 ou 2, comprenant une répétition (150) de l'étape de pré-chargement (130) et de l'étape de commande (140), jusqu'à ce que l'ensemble des données de sortie dans tous les canaux de sortie soient calculées (160).

4. Procédé selon l'une des revendications 1 à 3, dans lequel l'ensemble des données de sorties pouvant être calculées correspond à la taille maximale des données de sortie pouvant être reçues en une fois dans chaque canal de sortie, l'ensemble pouvant comprendre l'intégralité des données de sortie (MAP) de chaque canal de sortie, ou ne comprendre qu'une segmentation des données de sortie (STRP) de chaque canal de sortie.

5. Procédé selon la revendication 4, dans lequel ladite segmentation des données de sortie (STRP) de chaque canal de sortie correspond à une ligne ou à un paquet de lignes de données de sortie.

6. Procédé selon l'une des revendications 4 ou 5 prise en combinaison avec la revendication 3, dans lequel si ledit ensemble ne comprend qu'une segmentation des données de sortie (STRP) de chaque canal de sortie, alors la répétition (150) de l'étape de pré-chargement (130) et de l'étape de commande (140) comprend :
a) une répétition de l'étape pré-chargement (130) avec des noyaux de convolution différents de ceux de l'étape pré-chargement (130) précédente et une répétition de l'étape de commande (140) pour la même segmentation, jusqu'à ce que les toutes les données de sortie de ladite segmentation soient calculées pour tous les canaux de sortie (150-N), et, en outre,
b) un renouvellement de l'étape a) (260-262) pour d'autres segmentations, jusqu'à ce que les données de sortie soient calculées dans toutes les segmentations de tous les canaux de sortie (270).

7. Procédé selon l'une des revendications précédentes, dans lequel si la taille de l'emplacement mémoire disponible dans la mémoire de travail temporaire est plus petite qu'un seuil de taille minimal (112), alors le procédé comprend en outre une allocation (122) d'un emplacement mémoire d'une mémoire tampon de l'unité de calcul ayant la taille du seuil de taille minimal, et ledit pré-chargement (120) est effectué dans l'emplacement mémoire alloué, et est d'un nombre maximal de noyaux de convolution pouvant être stockés à ce seuil de taille minimal.

8. Procédé selon l'une des revendications précédentes, dans lequel les noyaux de convolution comprennent des données de poids, et l'étape de pré-chargement (130) comprend une réorganisation des données de poids des noyaux de convolution pour optimiser ledit calcul (144) des données de sorties par l'unité de calcul.

9. Procédé selon l'une des revendications précédentes prise en combinaison avec la revendication 2, dans lequel les noyaux de convolution comprennent des données de poids, et ledit calcul (144) des données de sorties comprend des opérations de multiplication et accumulation des données d'entrée des blocs chargés avec les données de poids des noyaux de convolution pré-chargés.

10. Procédé selon l'une des revendications précédentes, dans lequel, avant le pré-chargement (130) des noyaux de convolution dans la mémoire de travail temporaire, les noyaux de convolution sont stockés dans une mémoire non-volatile interne ou externe à l'unité de calcul, et, lors de la commande (140) de l'unité de calcul, les données d'entrée et les données de sortie sont stockées dans une mémoire volatile interne ou externe à l'unité de calcul.

11. Produit programme d'ordinateur comprenant des instructions qui, lorsque le programme est exécuté par un ordinateur, conduisent celui-ci à mettre en œuvre le procédé selon l'une des revendications 1 à 10.

12. Support lisible par ordinateur comprenant des instructions qui, lorsqu'elles sont exécutées par un ordinateur, conduisent celui-ci à mettre en œuvre le procédé selon l'une des revendications 1 à 10.

13. Dispositif comprenant des moyens de traitement (ME) configurés pour gérer un calcul convolutif réalisé par une unité de calcul (UC) adaptée pour calculer des données de sorties sur des canaux de sortie à partir de noyaux de convolution appliqués à des blocs de données d'entrée sur au moins un canal d'entrée, les calculs sur chaque bloc de données d'entrée correspondant à respectivement chaque donnée de sortie sur les canaux de sortie, et les calculs avec chaque noyau de convolution correspondant aux données de sorties sur respectivement chaque canal de sortie, **caractérisé en ce que** les moyens de traitement (ME) sont en outre configurés pour :
- identifier (110) la taille d'un emplacement mémoire disponible dans une mémoire de travail temporaire de l'unité de calcul ;
- pré-charger (130) dans la mémoire de travail temporaire un nombre maximal de noyaux de convolution pouvant être stockés à cette taille ; et
- commander (140) l'unité de calcul pour calculer l'ensemble des données de sorties pouvant être calculées à partir noyaux de convolution pré-chargés.

14. Dispositif selon la revendication 13, dans lequel les moyens de traitement (ME) sont configurés pour commander de l'unité de calcul (UC) pour calculer l'ensemble des données de sorties pouvant être calculées à partir noyaux de convolution pré-chargés en chargeant (142) successivement dans l'unité de calcul des blocs de données d'entrée correspondant aux données de sorties dudit ensemble.

15. Dispositif selon l'une des revendications 13 ou 14, dans lequel les moyens de traitement (ME) sont configurés pour répéter (150) le pré-chargement (130) et la commande (140), jusqu'à ce que l'ensemble des données de sortie dans tous les canaux de sortie soient calculées (160).

16. Dispositif selon l'une des revendications 13 à 15, dans lequel ledit ensemble des données de sorties pouvant être calculées correspond à la taille maximale des données de sortie pouvant être reçues en une fois dans chaque canal de sortie, l'ensemble pouvant comprendre l'intégralité des données de sortie (MAP) de chaque canal de sortie, ou ne comprendre qu'une segmentation des données de sortie (STRP) de chaque canal de sortie.

17. Dispositif selon la revendication 16, dans lequel ladite segmentation des données de sortie (STRP) de chaque canal de sortie correspond à une ligne ou à un paquet de lignes de chaque canal de sortie.

18. Dispositif selon l'une des revendications 16 ou 17 prise en combinaison avec la revendication 15, dans lequel, si ledit ensemble ne comprend qu'une segmentation des données de sortie (STRP) de chaque canal de sortie, alors, pour répéter (150) le pré-chargement (130) et la commande (140), les moyens de traitement (ME) sont configurés pour :
a) répéter le pré-chargement (130) avec des noyaux de convolution différents de ceux du pré-chargement (130) précédent et répéter la commande (140) pour la même segmentation, jusqu'à ce que les toutes les données de sortie de ladite segmentation soient calculées pour tous les canaux de sortie (150-N), et, en outre,
b) renouveler a) pour d'autres segmentations (260-262), jusqu'à ce que les données de sortie soient calculées dans toutes les segmentations de tous les canaux de sortie (270).

19. Dispositif selon l'une des revendications 13 à 18, dans lequel si la taille de l'emplacement mémoire disponible dans la mémoire de travail temporaire est plus petite qu'un seuil de taille minimal (112-N), alors les moyens de traitement (ME) sont configurés pour allouer un emplacement mémoire d'une mémoire tampon de l'unité de calcul ayant la taille du seuil de taille minimal (122), et pré-charger dans l'emplacement mémoire alloué un nombre maximal de noyaux de convolution pouvant être stockés à ce seuil de taille minimal (130).

20. Dispositif selon l'une des revendications 13 à 19, dans lequel les noyaux de convolution comprennent des données de poids, et les moyens de traitement (ME) sont configurés, lors du pré-chargement (130), pour réorganiser des données de poids des noyaux de convolution pour optimiser ledit calcul des données de sorties par l'unité de calcul (UC).

21. Dispositif selon l'une des revendications 13 à 20 prise en combinaison avec la revendication 14, dans lequel les noyaux de convolution comprennent des données de poids, et l'unité de calcul (UC) est configuré pour calculer les données de sorties par des opérations de multiplication et accumulation des données d'entrée des blocs chargés avec les données de poids des noyaux de convolution pré-chargés.

22. Système comprenant un dispositif (ME) selon l'une des revendications 13 à 21, ladite unité de calcul (UC), une mémoire non-volatile interne (NVM_I) ou externe (NVM_E) à l'unité de calcul destinée à stocker les noyaux de convolution, et une mémoire volatile interne (RAM_I) ou externe (RAM_E) à l'unité de calcul destinée à contenir les données d'entrée et les données de sortie.
